Europäisches Patentamt

European Patent Office

Office européen des brevets

(11) Veröffentlichungsnummer: **0 178 630 B1**

# EUROPÄISCHE PATENTSCHRIFT

(45) Veröffentlichungstag der Patentschrift: **18.09.91**

(51) Int. Cl.⁵: **B01D 53/34**, C01F 11/46

(21) Anmeldenummer: **85113065.8**

(22) Anmeldetag: **15.10.85**

(54) Verfahren und Vorrichtung zur Abscheidung von SO3, Schwefelsäure und Schwefelsäurenebeln aus Rauchgasen.

(30) Priorität: **17.10.84 DE 3437965**

(43) Veröffentlichungstag der Anmeldung:
**23.04.86 Patentblatt 86/17**

(45) Bekanntmachung des Hinweises auf die
Patenterteilung:
**18.09.91 Patentblatt 91/38**

(84) Benannte Vertragsstaaten:
**AT BE CH DE FR GB IT LI LU NL SE**

(56) Entgegenhaltungen:
**DE-A- 3 008 718**
**DE-A- 3 011 592**
**DE-A- 3 136 529**
**GB-A- 1 480 034**
**GB-A- 1 498 606**

(73) Patentinhaber: **Noell-KRC Umwelttechnik GmbH**
**Alfred-Nobel-Strasse 20**
**W-8700 Würzburg 1(DE)**

(72) Erfinder: **Hüller, Rolf, Dr. Dipl.-Chem.**
**Holzgasse 7**
**W-8715 Iphofen(DE)**
Erfinder: **Knülle, Helmut, Dr. Dipl.-Ing.**
**Adolfstrasse 30**
**W-3500 Kassel(DE)**

(74) Vertreter: **Werner, Hans-Karsten, Dr. et al**
**Deichmannhaus am Hauptbahnhof**
**W-5000 Köln 1(DE)**

Rank Xerox (UK) Business Services

## Beschreibung

Gegenstand der vorliegenden Erfindung ist ein Verfahren zur Abscheidung von $SO_3$, Schwefelsäure und Schwefelsäurenebeln aus Rauchgasen von naßen Entschwefelungsanlagen (Naß-REA) durch Besprühen von festen, aus mindestens zwei Abscheiderlagen bestehenden Tropfenabscheidersystemen.

Die DE-A1-31 36 529 beschreibt ein Verfahren und eine Vorrichtung zur feuchten Entschwefelung von Abgasen durch Auswaschen des Gases mit einer Calciumverbindung in einem Absorptionsturm.

In naßen Entschwefelungsanlagen, insbesondere in zweistufigen Verfahren gemäß dem Verfahren der Knauf-Research Cottrell nach DE-A1-30 11 592 wird oberhalb der letzten Besprühung der Rauchgase mit der kalksteinhaltigen Waschsuspension, die Abscheidung von Wasser aus den Rauchgasen durch einen mit Wasser besprühten Tropfenabscheider vorgenommen. Es wurde festgestellt, daß das Reingas nach den Tropfenabscheidern immer noch gewisse Mengen an $SO_3$, Schwefelsäure und Schwefelsäurenebeln enthalten kann. Insbesondere wenn durch die Abkühlung der Säuretaupunkt unterschritten ist, führt dies zu der Ausbildung von flüssiger verdünnter Schwefelsäure, die in den nachgeschalteten Teilen der Anlage, nämlich dem Reingas-Kanalstück, einem etwa vorhandenem naßen Gebläse sowie dem Kamin zu schwerwiegenden Korrosionen führen kann. Es wurde weiter beobachtet, daß die Menge und Konzentration der dabei gebildeten Schwefelsäure überproportional ansteigt, wenn schwefelreiche Kohlen wie z.B. niedersächsische Salzkohle verbrannt werden. Dieses Entweichen von $SO_3$, Schwefelsäure und Schwefelsäurenebeln in die Reingase durch die festen Tropfenabscheidersysteme läßt sich trotz des erheblichen Überschußes an eingespühter Kalksteinsuspension nicht vermeiden und erfordert daher zumindest eine säurefeste Ausgestaltung des Reingas-Kanalstückes, der naßen Gebläse, des Kamins sowie eines oftmals eingeschalteten regenerativen Gasvorwärmers (Regavo).

Die Erfindung hat sich die Aufgabe gestellt, das Verfahren der naßen Entschwefelung von Rauchgasen so zu modifizieren, daß es zu einer vollständigen Abscheidung von $SO_3$, Schwefelsäure und Schwefelsäurenebeln kommt, so daß diese nicht mehr mit dem Reingas entweichen und bei Unterschreitung des Säuretaupunktes zur Kondensation von verdünnter Schwefelsäure führen können.

Diese Aufgabe läßt sich überraschend einfach dadurch lösen, daß mindestens eine der Abscheiderlagen besprüht wird mit einer, bezogen auf die insgesamte im Gas verbliebenen Menge Schwefelsäure überschüssigen Menge an Natronlauge, Soda, wässrigem Ammoniak oder Gemischen derselben und die abfließende Sprühlösung einen pH-Wert von mindestens 9 aufweist.

Überraschenderweise läßt sich die abfließende Sprühlösung ohne Beeinträchtigung irgendeines Teiles des Gesamtverfahrens in die naße Entschwefelungsanlage einleiten. Die abfließende Sprühlösung enthält außer Restmengen von unverbrauchter Natronlauge, Soda oder Ammoniak in erheblichem Umfang Natriumsulfat bzw. Ammoniumsulfat, von denen bekannt war, daß sie zumindest in größeren Mengen das Kristallwachstum von Calciumsulfatkristallen von kleinen zu großen Kristallen negativ beeinflussen. Das Einsprühen von derartigen alkalischen Lösungen zur Absorption des im Rauchgas verbliebenen $SO_3$, sowie der Schwefelsäure und Schwefelsäurenebel wurde deshalb vom Fachmann zunächst einmal gar nicht in Erwägung gezogen, da es zumindest erforderlich zu sein schien, die abfließende Sprühlösung separat aufzufangen und nicht in die naße Entschwefelungsanlage einzuleiten. Die abfließende Sprühlösung hätte bei separater Ableitung obendrein ein neues, relativ problematisches Nebenprodukt dargestellt, das regeneriert werden mußte und nicht ohne weiteres dem Abwasser zugeleitet werden konnte. Überraschenderweise hat sich herausgestellt, daß die Menge an abfließender Sprühlösung im Verhältnis zur Gesamtmenge der bei der naßen Entschwefelung eingesetzten Kalksteinsuspension so gering ist, daß sie das Gesamtverfahren nicht negativ beeinflußt.

Um mit möglichst geringen Mengen an alkalischer Sprühlösung auszukommen, sollte die alkalisch besprühte Abscheiderlage einen großflächigen Kontakt zwischen Gas und Waschlauge ermöglichen. Dazu kann es zweckmäßig sein, nicht nur eine sondern mehrere Abscheiderlagen vorzusehen und alkalisch zu besprühen. Als Material für derartige Abscheiderlagen eignen sich insbesondere glasfaserverstärktes Polypropylengewebe oder einfaches Polypropylengewebe. Die Besprühung erfolgt zumindest bei der obersten Abscheiderlage nur noch von unten. Bei Verwendung mehrerer alkalisch besprühter Abscheiderlagen können die unteren Abscheiderlagen sowohl von oben als von unten besprüht werden.

Als alkalische Sprühlösung werden Natronlauge und Sodalauge oder Gemische derselben bevorzugt, da bei wässrigem Ammoniak gewisse Mengen an Ammoniakgas mit dem Reingas entweichen. Sofern jedoch nach der Entschwefelung noch eine katalytische Umsetzung der Stickoxide mit Ammoniak erfolgen soll, kann die Abscheidung von $SO_3$, Schwefelsäure und Schwefelsäurenebeln aus dem Rauchgas auch mit wässrigem Ammoniak erfolgen, da bei der katalytischen Umsetzung der Stickoxide sowieso Ammoniak zugesetzt werden muß. Ein Besprühen des Tropfenabscheidersystems mit wässrigen Calciumhydroxidlösungen hat sich als ungeeignet erwiesen, da es hierbei leicht zur Ablagerung von schwerlöslichen Calciumsulfat an und in den Abscheiderlagen kommen kann, was zu schwerwiegenden Störungen des Gesamtsystems führen würde. Erfindungsgemäß wird daher die Abscheidung nur mit Natronlauge, Soda, wässrigem Ammoniak und Gemischen derselben durchgeführt.

Das erfindungsgemäße Verfahren wird in dem nachfolgenden Beispiel näher erläutert:

Beispiel

Rauchgas aus einer Braunkohlefeuerung mit einer Feuerungsleistung von 3000 m³/h/MW, die mit niedersächsischer Salzkohle befeuert wurde, wies nach der nassen Entschwefelung (Naß-REA nach Knauf Cottrell) eine Rauchgastemperatur von 160°C auf. Die $SO_3$-Konzentration im Reingas betrug noch immer 400 mg/m³. In einem anschließenden Versuch wurde die obere Abscheiderlage des Tropfenabscheidersystems von unten anstelle von Prozeßwasser mit einer 1%-igen Natronlaugelösung besprüht. Die Menge betrug 40 ml/m³ Rauchgas. Die $SO_3$-Konzentration im Reingas sank daraufhin auf unter 20 mg/m³. Die verdünnte Natronlauge floß dabei wie bei der herkömmlichen Verfahrensweise das Prozeßwasser nach unten in den Absorberturm ab und vermischte sich mit der Kalksteinsuspension bzw. der entstehenden Gipssuspension. Dabei wurden keine Störungen des Kristallwachstums der Gipskristalle oder sonstige Störungen beobachtet. Bei der wesentlich niedrigeren $SO_3$-Konzentration im Reingas wurden keine $SO_3$-Nebel oder sauren Kondensate beobachtet, die zur Korrosion des Reingaskanalstückes, der nassen Gebläse, des Kamins oder des regenerativen Gasvorwärmers beobachtet.

Versuche mit Sodalösung führten zu vergleichbar guten Ergebnissen, so daß die Natronlauge ganz oder teilweise durch Soda ersetzt werden kann. In beiden Fällen ist es möglich, den Wirkungsgrad der $SO_3$-Abscheidung aus dem Reingas auf ca. 95% einzustellen und damit auch Salzkohle mit einer erfindungsgemäß modifizierten nassen Entschwefelungsanlage ausreichend und zufriedenstellend zu entschwefeln.

**Patentansprüche**

1. Verfahren zur Abscheidung von $SO_3$, Schwefelsäure und Schwefelsäurenebeln aus Rauchgasen von nassen Entschwefelungsanlagen (Naß-REA) durch Besprühen von festen, aus mindestens zwei Abscheiderlagen bestehenden Tropfenabscheidersystemen, dadurch gekennzeichnet, daß mindestens eine Abscheiderlage besprüht wird mit einer, bezogen auf die insgesamt im Gas verbliebene Menge Schwefelsäure überschüssigen Menge an Natronlauge, Soda, wässrigem Ammoniak oder Gemischen derselben und die abfließende Sprühlösung einen pH-Wert von mindestens 9 aufweist.

2. Verfahren gemäß Anspruch 1, dadurch gekennzeichnet, daß die abfließende Sprühlösung in die naße Entschwefelungsanlage eingeleitet wird.

**Claims**

1. Process for the separation of $SO_3$, sulphuric acid, and sulphuric acid mists from flue gas of wet desulphurizing plants (Naß-REA) by spraying of permanent droplet separating systems consisting of at least two separator layers, characterized in that at least one separator layer is sprayed with an amount of caustic soda, soda, aqueous ammonia or mixtures thereof in excess over the total amount of sulphuric acid remaining in the gas, and the spray solution flowing off has a pH value of at least 9.

2. Process according to claim 1, characterized in that the spray solution flowing off is fed into the wet desulphurizing plant.

**Revendications**

1. Procédé de séparation de $SO_3$, d'acide sulfurique et de brouillards d'acide sulfurique de gaz de fumée d'installations de désulfuration par voie humide, par pulvérisation de systèmes solides de séparation de gouttes, comprenant au moins deux étages de séparation, caractérisé en ce qu'on pulvérise au moins une couche de séparation avec une quantité de lessive de soude, ou de carbonate de sodium, d'amoniaque, ou d'un mélange de ces corps, en excès par rapport à la quantité d'acide sulfurique totale subsistant dans le gaz, et la solution de pulvérisation qui s'écoule ayant un pH d'au moins 9.

2. Procédé selon la revendication 1, caractérisé en ce que la solution de pulvérisation qui s'écoule est introduite dans l'installation de désulfuration par voie humide.